# DEMANDE DE BREVET EUROPEEN

(11) **EP 2 026 259 A1**
(43) Date de publication de la demande: **18.02.2009**
(21) Numéro de dépôt: 07301300.5
(22) Date de dépôt: 09.08.2007
(51) Int. Cl.: G06Q 10/00

(54) **Procédé de gestion d'organisation de réunions entre personnes disposant de terminaux hétérogènes, pour un coeur de réseau IMS, et serveur d'application associé**

(71) Demandeur: Alcatel Lucent, 75008 Paris (FR)
(72) Inventeur: Maag, Maria Laura, 91460 MARCOUSSIS (FR); Robinson, Julien, 92530 Le Plessis-Robinson (FR)
(74) Mandataire: Hedarchet, Stéphane

(57) **Abrégé**

Un serveur d'application (ASC) est dédié à la gestion de l'organisation de réunions au sein d'un réseau IMS (CRI) connecté à au moins un réseau Internet (RI) et un réseau de téléphonie (RT) et comprenant au moins un autre serveur d'application de type serveur vocal (AS1) et un autre serveur d'application de type serveur de messagerie (AS2) propres à participer à des communications avec des terminaux de communication (T1-T6) de différents types connectés aux réseau Internet (RI) et de téléphonie (RT). Ce serveur d'application (ASC) comprend une interface propre à être couplée aux autres serveurs d'application, et est agencé, en cas de demande par un client du réseau IMS (CRI), au moyen d'un terminal de communication (T1), d'organisation d'une réunion à au moins une date proposée avec des personnes choisies disposant chacune d'au moins un terminal de communication (T2-T6), i) pour adresser à chaque personne choisie, via l'un au moins des autres serveurs d'application (AS1,AS2), une demande de participation à la réunion et chaque date proposée associée, de sorte qu'elle indique sa disponibilité pour chaque date proposée associée, et ii) pour définir au moins une date de réunion en fonction des disponibilités indiquées.

## Description

L'invention concerne les (coeurs de) réseaux de communication (ou domaines) dits IMS (pour « IP Multimedia Subsystem ») et plus précisément la gestion de l'organisation de réunions pour des clients de tels réseaux.

Il est rappelé que les coeurs de réseau de communication (ou domaines) IMS sont destinés à offrir des services spécifiques à des clients d'opérateurs de réseaux de communication offrant une connectivité IP, comme par exemple les réseaux d'accès IP GPRS ou UMTS. A titre d'exemples non limitatifs, un domaine IMS peut permettre à un utilisateur d'afficher sur l'écran de son terminal de communication (mobile ou fixe ou encore sans fil) une page Internet personnelle d'un utilisateur appelant, ou de disposer de services de communication vocale améliorée ou de services multimédia IP ou encore de services de messagerie instantanée, ou encore de faire sonner plusieurs de ses terminaux lorsqu'il est appelé. La mise en oeuvre de ces services IMS se fait généralement au moyen de serveurs d'application et du protocole de signalisation SIP (pour « Session Initiation Protocol »).

Il est également rappelé que la connexion d'un terminal de communication à un domaine IMS se fait par l'intermédiaire d'un réseau de communication, et plus précisément par le réseau d'accès d'un tel réseau de communication. On entend ici par « réseau d'accès » tout type d'infrastructure de communication permettant d'accéder à un réseau de communication non filaire, comme par exemple un réseau mobile (ou cellulaire) de type dit paquet ou « PS » (pour « Packet Switched »), tel qu'un réseau GPRS, ou un réseau de communication sans fil ou WLAN (pour « Wireless Local Area Network ») ou WiMAX, ou bien filaire (ou fixe), comme par exemple un réseau xDSL.

Comme le sait l'homme de l'art, des outils informatiques (ou logiciels) de gestion, comme par exemple MS Exchange® ou Lotus®, permettent de gérer l'organisation de réunions, par exemple entre des salariés d'une même entreprise ou d'un groupe d'entreprises dès lors que leurs terminaux de communication sont tous connectés à leur réseau privé d'entreprise(s). On entend ici par « gérer l'organisation d'une réunion » le fait de contacter, selon une procédure automatisée, des personnes qui sont concernées par une réunion envisagée afin de requérir leurs disponibilités respectives pour certaines dates proposées ou dans un intervalle temporel donné, puis de fixer la date de cette réunion en fonction des disponibilités requises.

On comprendra que de tels outils de gestion (qui sont éventuellement des outils Internet) ne peuvent accomplir totalement leur tâche qu'à condition, d'une part, qu'ils aient pu transmettre à chaque personne concernée une demande de participation à une réunion et chaque date proposée associée, et d'autre part, qu'ils puissent accéder à l'outil de gestion d'agenda du terminal de communication de chaque personne concernée afin de pouvoir obtenir ses disponibilités.

Or cela est notamment impossible lorsque l'une des personnes concernées ne peut pas être jointe du fait qu'elle dispose, au moment de la tentative d'organisation de la réunion, d'un terminal de communication qui ne peut pas recevoir de demande de participation à une réunion générée par un outil de gestion et/ou qui ne peut pas se connecter au réseau privé d'entreprise(s) pour communiquer à l'outil de gestion les disponibilités de son utilisateur et/ou qui dispose d'un outil de gestion d'agenda qui ne peut pas communiquer avec l'outil de gestion qui a généré la demande. Cela peut par exemple être le cas lorsque l'une des personnes concernées dispose d'un terminal de communication qui ne peut pas se connecter à l'Internet.

Cela peut être également impossible lorsque certaines personnes refusent que l'on accède à l'outil de gestion d'agenda de leur terminal de communication afin de ne pas divulguer les informations qu'il contient.

Chaque fois qu'un outil de gestion ne peut pas accomplir sa tâche, la personne qui l'a chargé de cette tâche doit alors contacter personnellement (ou faire contacter), par téléphone ou par messagerie électronique ou encore par télécopie, chaque personne concernée afin d'obtenir ses disponibilités, puis (faire) déterminer la meilleure date de réunion compte tenu des disponibilités obtenues, ce qui est fastidieux et peut s'avérer très chronophage et/ou peu fiable.

L'invention a donc pour but d'améliorer la situation pour les clients d'un (coeur de) réseau (ou domaine) de type IMS.

Elle propose à cet effet un procédé dédié à l'organisation de réunions pour des clients d'un (coeur de) réseau de type IMS connecté à au moins un réseau Internet et un réseau de téléphonie et comprenant au moins un serveur d'application de type serveur vocal et au moins un serveur d'application de type serveur de messagerie propres à participer à des communications avec des terminaux de communication de différents types connectés aux réseau Internet et réseau(x) de téléphonie.

Ce procédé se caractérise par le fait qu'il consiste :
- à prévoir dans le (coeur de) réseau IMS un serveur d'application complémentaire qui est dédié à la gestion de réunions et qui est couplé, via une interface, à ses autres serveurs d'application, et
- lorsqu'un client effectue au moyen de son terminal de communication une demande d'organisation d'une réunion à au moins une date proposée avec des personnes choisies qui disposent chacune d'au moins un terminal de communication, à utiliser ce serveur d'application complémentaire, d'une part, pour adresser à chaque personne choisie, via l'un au moins des autres serveurs d'application, une demande de participation à la réunion et chaque date proposée associée, afin qu'elle indique sa disponibilité pour chaque date proposée associée, et d'autre part, pour définir au moins une date de réunion en fonction des disponibilités indiquées.

Le procédé selon l'invention peut comporter d'autres caractéristiques qui peuvent être prises séparément ou en combinaison, et notamment :
- la personne choisie peut indiquer immédiatement sa disponibilité pour chaque date proposée associée lorsqu'elle reçoit une demande de participation à une réunion ;
- en variante ou en complément, on peut adresser avec la demande de participation à une réunion au moins une adresse de communication à laquelle chaque personne choisie pourra indiquer ultérieurement sa disponibilité pour chaque date proposée associée ;
   > la demande de participation à une réunion peut comprendre au moins une adresse de communication associée à un serveur d'application choisi parmi le serveur vocal, un serveur de messagerie et un serveur Internet (ou « web ») du coeur de réseau IMS qui permet d'accéder à une page Internet (ou web) de consultation d'un calendrier du planning de la réunion et dans lequel la personne destinatrice de la demande peut sélectionner parmi les dates proposées celle(s) où elle est disponible ;
- le client demandeur peut transmettre au serveur d'application complémentaire une liste qui contient le nom de chaque personne choisie en correspondance d'au moins un identifiant de communication d'un terminal de communication qu'elle utilise ;
- en présence d'un serveur d'application auxiliaire, dédié au stockage de données relationnelles au sein du (coeur de) réseau IMS et accessible via l'interface du serveur d'application complémentaire, le client demandeur peut transmettre au serveur d'application complémentaire soit un identifiant de groupe de personne(s) désignant une liste comprenant le nom de chaque personne choisie en correspondance d'au moins un identifiant de communication d'un terminal de communication qu'elle utilise et accessible via le serveur d'application auxiliaire, soit une liste contenant le nom de chaque personne choisie dont l'identifiant de communication d'au moins un terminal de communication qu'elle utilise est accessible via le serveur d'application auxiliaire. Ainsi, le serveur d'application complémentaire peut récupérer auprès du serveur d'application auxiliaire au moins un identifiant de communication utilisé par chaque personne choisie dont le nom est contenu soit dans la liste identifiée par l'identifiant de groupe de personne(s) reçu, soit dans la liste reçue.

L'invention propose également un serveur d'application complémentaire (ou serveur d'application de gestion d'organisation de réunions) du type de celui mentionné dans le procédé de gestion présenté ci-avant.

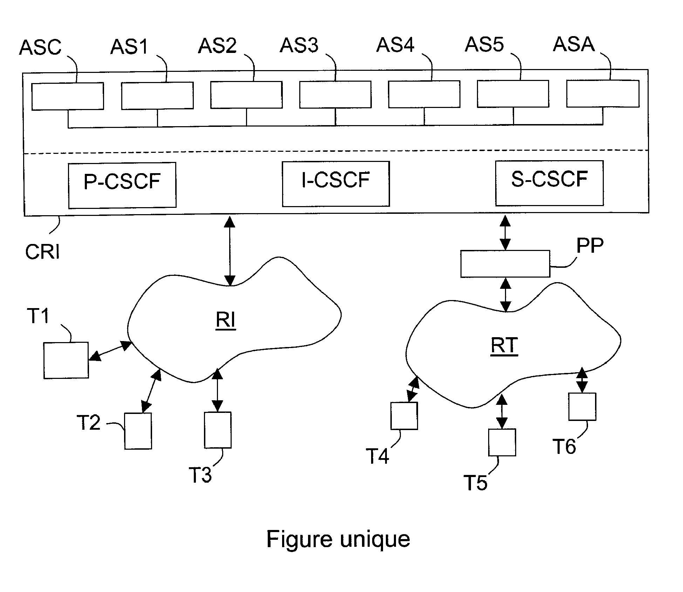

D'autres caractéristiques et avantages de l'invention apparaîtront à l'examen de la description détaillée ci-après, et du dessin annexé, sur lequel l'unique figure illustre de façon très schématique un (coeur de) réseau IMS équipé d'un serveur d'application de gestion d'organisation de réunions selon l'invention. Le dessin annexé pourra non seulement servir à compléter l'invention, mais aussi contribuer à sa définition, le cas échéant.

L'invention a pour objet de permettre à des clients d'un (coeur de) réseau (ou domaine) de type IMS d'organiser de façon automatisée des réunions avec des personnes qui disposent de terminaux de communication hétérogènes.

On entend ici par « terminaux de communication hétérogènes » des terminaux de communication qui peuvent accéder à des groupes de réseau(x) de communication différents et/ou qui disposent d'outils de gestion d'agenda différents qui ne peuvent pas communiquer entre eux et/ou dont les utilisateurs acceptent pour certains et refusent pour d'autres que l'on accède aux outils de gestion d'agenda qu'ils comportent.

Par ailleurs, on entend ici par « terminal de communication » tout équipement de communication capable de se connecter à un réseau de communication connecté à un (coeur de) réseau (ou domaine) IMS et d'échanger des données avec un autre équipement de communication. Il pourra donc s'agir, par exemple, d'un téléphone fixe ou mobile (ou cellulaire), d'un assistant personnel numérique (ou PDA) communiquant ou d'un ordinateur fixe ou portable équipé d'un dispositif de communication.

On a schématiquement représenté sur l'unique figure un (coeur de) réseau (ou domaine) IMS CRI auquel sont connectés, directement ou via une passerelle PP, un réseau d'accès d'un réseau de communication de type Internet (ou plus généralement de type IP (pour « Internet Protocol »)) RI et un réseau d'accès d'un réseau de téléphonie RT, par exemple de type PSTN (« Public Switched Telephone Network » - réseau téléphonique commuté public).

On notera que l'invention n'est pas limitée aux situations dans lesquelles le domaine IMS CRI est connecté à un réseau d'accès d'un réseau Internet RI et à un réseau d'accès d'un réseau PSTN RT. Elle concerne en effet toutes les situations dans lesquelles le domaine IMS est connecté à un réseau d'accès d'un réseau Internet et à au moins un réseau d'accès d'un réseau de téléphonie filaire ou non filaire (éventuellement mobile (ou cellulaire)). D'une manière générale, l'invention concerne tout type de réseau d'accès assurant la liaison entre un réseau (ou domaine) IMS et un terminal de communication Ti, et notamment un réseau d'accès d'un réseau mobile de type dit paquet ou PS, par exemple un réseau GPRS, ou un domaine d'un réseau de communication fixe, comme par exemple un réseau xDSL, ou encore un domaine d'un réseau local sans fil (standards WLAN (« Wireless Local Area Network » - IEEE 802.11, Wi-Fi, ETSI HiperLAN/2), WiMAX (IEEE 802.16, ETSI HiperMAN) et Zigbee).

Les constituants d'un (coeur de) réseau IMS CRI étant bien connus de l'homme de l'art, ils ne seront pas décrits ici en détails, comme c'est notamment le cas dans la spécification RFC 23.002 de l'organisme 3GPP, accessible sur le site Internet du 3GPP. Il est simplement rappelé ci-après quelques fonctionnalités de modules du réseau (ou domaine) IMS CRI, utiles à la compréhension de l'invention.

Un réseau IMS CRI permet à des clients abonnés de disposer de services IMS spécifiques lorsqu'ils sont raccordés à un domaine paquet de leur réseau d'appartenance ou d'un réseau visité dans le cas du « roaming ».

Un réseau IMS comporte notamment un module de type P-CSCF (pour « Proxy-Call Session Control Function »), un module de type S-CSCF (pour « Serving-Call Session Control Function »), un module de type I-CSCF (pour « Interrogating-Call Session Control Function ») et des serveurs d'application ASj, ASA et ASC.

Le module de type P-CSCF est un module de contrôle de session IMS. Il est le premier point de contact avec le réseau IMS pour un terminal Ti d'un client abonné. Ce module P-CSCF comprend une fonction CSCF assurant le routage de messages selon le protocole SIP (« Session Initiation Protocol »). Il assure généralement, et notamment, une fonction de sécurité, une fonction de contrôle du plan d'utilisateur (ou « user plane »), une fonction de compression SIP, une fonction de génération d'identifiants de taxation, une fonction d'assertion d'identité de l'abonné, une fonction de correspondance entre l'adresse publique et l'adresse IP de l'abonné, et une fonction de gestion de routage vers et depuis un autre module de contrôle de session appelé S-CSCF.

Le module de type S-CSCF constitue la porte d'entrée vers les services IMS offerts par le réseau IMS. A cet effet, il est connecté à un ou plusieurs serveurs d'application ASj, ASA et ASC. Il est notamment chargé de l'authentification des abonnés et du stockage de l'adresse du module P-CSCF auquel est raccordé le terminal Ti d'un client du réseau IMS CRI.

Le module de contrôle de session ou module I-CSCF est chargé d'initier l'enregistrement d'un terminal de communication UE auprès du module S-CSCF qui appartient au réseau IMS (dit « receveur ») auprès duquel il a souscrit son abonnement aux services IMS. Il est également chargé de rechercher où se trouvent les abonnés aux services lMS de son réseau IMS CRI. A cet effet, il est généralement connecté aux coeurs des réseaux (ou domaines) IMS d'autres opérateurs que le sien, et plus précisément à leurs modules S-CSCF.

Les serveurs d'application (ou « Application servers ») ASj, ASA et ASC sont chargés d'offrir des services IMS spécifiques. Par exemple, un premier serveur d'application AS1 est un serveur vocal, un deuxième serveur d'application AS2 est un serveur de messagerie électronique (« e-mail »), un troisième serveur d'application AS3 est un serveur de messagerie instantanée (« Instant Messaging » (IM)), un quatrième serveur d'application AS4 est un serveur Internet (ou serveur web), chargé de fournir des accès à des pages web de site(s) web, un cinquième serveur d'application AS5 est un serveur de présence, chargé de stocker des informations de présence signalant si des terminaux Ti sont effectivement connectés à un réseau d'accès), et un sixième serveur d'application (dit auxiliaire) ASA est un serveur de données relationnelles, éventuellement de type XDMS (« XML Data Management Server »), chargé de fournir des informations relatives aux clients du réseau IMS CRI (listes (ou groupes) de contacts, profils, autorisations d'accès et de présence, etc) et stockées dans une base de données XML.

On notera que le serveur vocal AS1, le serveur de messagerie électronique AS2, le serveur de messagerie instantanée AS3 et le serveur web AS4 sont agencés pour participer à des communications avec des terminaux de communication Ti.

Dans l'exemple de réalisation illustré, le réseau IMS CRI comporte les six serveurs d'application présentés ci-avant ASj (j = 1 à 5) et ASA, ainsi qu'un serveur d'application dit « complémentaire » ASC (objet de l'invention et sur lequel on reviendra plus loin). Mais, l'invention n'est pas limitée à ce nombre (7) de serveurs d'application. Elle concerne en effet tout réseau IMS comportant au moins un serveur vocal AS1 et au moins un serveur de messagerie AS2 propres à participer à des communications avec des terminaux de communication Ti de différents types.

Le serveur d'application complémentaire ASC est, selon l'invention, dédié à la gestion de l'organisation de réunions pour des clients du réseau IMS CRI. Il comprend une interface d'accès qui est couplée à tous les autres serveurs d'application ASj et ASA.

Ce serveur d'application complémentaire ASC est chargé d'intervenir chaque fois qu'un client du réseau IMS CRI effectue au moyen d'un terminal de communication Ti une demande d'organisation de réunion avec des personnes choisies (disposant chacune d'au moins un terminal de communication Ti' connecté à l'un des réseaux Internet RI et de téléphonie RT) en proposant au moins une date (ou un intervalle temporel). Par exemple, le client IMS peut vouloir organiser un dîner avec certains de ces amis un samedi soir choisi parmi trois samedis successifs.

Cette demande d'organisation de réunion se fait au moyen d'un message dédié destiné au serveur d'application complémentaire ASC. Pour ce faire, le terminal de communication Ti du client IMS qui veut organiser une réunion doit disposer d'une application dédiée qui lui permet de contacter le serveur d'application complémentaire ASC, et ce dernier peut par exemple lui transmettre en retour une page contenant des champs d'information à renseigner et un éventuel calendrier dans lequel il doit cocher (définir) les dates de réunion proposées. Les informations renseignées dans les divers champs et les dates de réunion proposées sont transmises au serveur d'application complémentaire ASC. Ces informations peuvent être de trois types.

Il peut en effet s'agir d'informations qui définissent explicitement le nom de chaque personne choisie et l'identifiant de communication de l'un au moins de ses terminaux de communication Ti' (par exemple un numéro de téléphone ou une adresse électronique (adresse e-mail)). Dans ce cas, lorsque le serveur d'application complémentaire ASC reçoit un message contenant de telles informations, il peut immédiatement tenter de contacter les personnes choisies via leurs terminaux de communication Ti' respectifs, désignés par les identifiants de communication reçus.

Il peut également s'agir d'un identifiant de groupe de personne(s) qui désigne dans une base de données relationnelle, accessible via le serveur d'application auxiliaire ASA, une liste qui comprend le nom de chaque personne choisie en correspondance d'au moins un identifiant de communication d'un terminal de communication Ti' qu'elle utilise (par exemple un numéro de téléphone ou une adresse électronique). Dans ce cas, lorsque le serveur d'application complémentaire ASC reçoit un message contenant un identifiant de groupe de personne(s), il doit récupérer auprès du serveur d'application auxiliaire ASA la liste qui est désignée par cet identifiant reçu et qui contient les noms des personnes choisies et les identifiants de communication de l'un au moins des terminaux de communication Ti' que chacune de ces personnes choisies utilise. Une fois en possession de cette liste, le serveur d'application complémentaire ASC est en mesure de tenter de contacter les personnes choisies de cette liste via leurs terminaux de communication Ti' respectifs, désignés par les identifiants de communication récupérés.

Il peut également s'agir d'une liste contenant le nom de chaque personne choisie, chaque nom étant par ailleurs stocké dans une base de données relationnelles, accessible via le serveur d'application auxiliaire ASA, en correspondance d'au moins un identifiant de communication d'un terminal de communication Ti' (par exemple un numéro de téléphone ou une adresse électronique). Dans ce cas, lorsque le serveur d'application complémentaire ASC reçoit un message contenant une liste de nom(s) de personne, il doit récupérer auprès du serveur d'application auxiliaire ASA les identifiants de communication de l'un au moins des terminaux de communication Ti' qu'utilise chacune des personnes de la liste. Une fois en possession de ces identifiants de communication, le serveur d'application complémentaire ASC est en mesure de tenter de contacter les personnes choisies de la liste reçue via leurs terminaux de communication Ti' respectifs, désignés par les identifiants de communication récupérés.

Le contact d'une personne choisie se fait en adressant à l'un au moins de ses terminaux de communication Ti', via le serveur vocal AS1 et/ou l'un au moins des serveurs de messagerie (textuelle) AS2 et AS3, une demande de participation à une réunion et chaque date proposée associée. Lorsque le message est textuel, il peut être éventuellement accompagné soit d'un calendrier dans lequel la personne destinatrice devra sélectionner parmi les dates proposées celle(s) où elle est disponible, soit de l'adresse Internet du serveur web AS4 qui permet l'accès à une page web de consultation d'un éventuel calendrier du planning en cours de réalisation (dans lequel la personne destinatrice devra sélectionner parmi les dates proposées celle(s) où elle est disponible). Lorsque le message est vocal, il peut être accompagné de l'adresse Internet du serveur web AS4 qui permet l'accès à une page web de consultation d'un éventuel calendrier du planning en cours de réalisation (dans lequel la personne destinatrice devra sélectionner parmi les dates proposées celle(s) où elle est disponible).

Le choix d'un serveur d'application AS1, AS2 ou AS3 par le serveur d'application complémentaire ASC, pour contacter une personne choisie, se fait en fonction du type de l'identifiant de communication du terminal de communication Ti' de cette personne choisie. Par exemple, si l'identifiant de communication est une adresse IP (Internet), alors le serveur d'application complémentaire ASC a deux possibilités : adresser un message textuel électronique (e-mail) ou instantané (IM). Pour finaliser sa sélection, le serveur d'application complémentaire ASC peut par exemple interroger le serveur de présence AS5 qui stocke des informations de présence signalant si un terminal de communication désigné est en ligne et s'il est disponible pour discuter. Si le terminal Ti' est en ligne et disponible pour discuter, alors le serveur d'application complémentaire ASC choisit de préférence de contacter la personne correspondante en lui adressant un message textuel instantané via le serveur de messagerie instantanée AS3. Si le terminal n'est pas en ligne et/ou indisponible pour discuter, alors le serveur d'application complémentaire ASC choisit de préférence de contacter la personne correspondante en lui adressant un message textuel électronique (e-mail) via le serveur de messagerie électronique AS2. En revanche, si l'identifiant de communication est un numéro de téléphone, alors le serveur d'application complémentaire ASC choisit de préférence de contacter la personne correspondante en lui adressant un message vocal via le serveur vocal AS1.

Si le serveur d'application complémentaire ASC dispose de plusieurs identifiants de communication de terminaux pour une même personne choisie, alors il peut soit sélectionner un identifiant de communication puis le serveur ASj (j = 1 à 3) qui est le mieux adapté au terminal de communication Ti' correspondant (après une éventuelle consultation du serveur de présence AS5), soit décider de contacter plusieurs terminaux de communication de cette personne choisie via plusieurs serveurs ASj (j = 1 à 3) différents.

Quel que soit le serveur d'application ASj (j = 1 à 3) sélectionné, le serveur d'application complémentaire ASC lui transmet un message contenant la demande de participation à une réunion (associée à un identifiant de réunion) et chaque date proposée associée, ainsi qu'au moins l'identifiant de communication du terminal de communication Ti' destinataire de cette demande et des dates proposées. Le serveur d'application ASj (j = 1 à 3) sélectionné transmet alors au terminal de communication Ti' désigné un message de demande de disponibilité, vocal ou textuel, définissant la demande de participation à une réunion (associée à son identifiant de réunion) et chaque date proposée associée.

Une fois qu'une personne choisie a reçu (lu ou écouté) un message de demande de disponibilité, vocal ou textuel, elle peut alors indiquer sa disponibilité pour chaque date proposée. On notera que si un message vocal est transmis à un terminal de communication Ti', mais que son utilisateur ne décroche pas ou est déjà en ligne, le message vocal peut par exemple être stocké dans un service de messagerie vocale.

L'indication de disponibilité peut se faire de plusieurs façons selon le type de message reçu.

En effet, si le message reçu est de type vocal, la personne peut être invitée par le serveur vocal AS1 à fournir immédiatement (c'est-à-dire pendant la communication établie pour transmettre le message de demande de disponibilité) sa disponibilité pour chaque date proposée associée. Si tel est le cas, le serveur vocal AS1 communique alors au serveur d'application complémentaire ASC l'identifiant de réunion et les dates de disponibilité et l'identifiant du terminal de communication Ti' de la personne appelée.

En variante, et comme indiqué précédemment, le message vocal peut contenir l'adresse de communication (Internet) du serveur web AS4 qui permet d'accéder à la page web de consultation du calendrier du planning en cours de réalisation. Ainsi, lorsque la personne appelée compose cette adresse Internet le serveur web AS4 la met en communication avec le site web (qui contient la page web de consultation du calendrier du planning) afin qu'elle puisse sélectionner parmi les dates proposées celle(s) où elle est disponible. On notera que cela peut également permettre à la personne appelée de consulter les dates qui ont déjà été saisies (ou fournies) par les autres personnes concernées par la réunion demandée.

Le serveur d'application complémentaire ASC est agencé de manière à récupérer auprès du serveur web AS4 les dates de disponibilité fournies (saisies ou sélectionnées) par certaines au moins des personnes concernées par une réunion (désignée par son identifiant de réunion). En variante, c'est le serveur web AS4 qui peut être agencé de manière à transmettre automatiquement au serveur d'application complémentaire ASC les dates de disponibilité qui ont été fournies (saisies ou sélectionnées) par certaines au moins des personnes concernées par une réunion (avec l'identifiant de ladite réunion).

Si le message vocal a été stocké dans un service de messagerie vocale ou si la personne ne veut ou ne peut pas fournir ses disponibilités immédiatement, elle peut également le faire ultérieurement. A cet effet, le message qui lui est transmis peut comporter au moins une adresse de communication à laquelle la personne pourra indiquer sa disponibilité pour chaque date proposée. Cette adresse de communication est par exemple celle du serveur vocal AS1 (il s'agit par exemple d'un numéro de téléphone dédié) ou bien, comme indiqué ci-avant, celle du serveur web AS4. Mais, on peut envisager de fournir à la fois l'adresse de communication du serveur vocal AS1 et l'adresse de communication du serveur web AS4 et/ou l'adresse de communication d'un serveur de messagerie AS2 ou AS3 (il s'agit par exemple d'une adresse IP). Ainsi, lorsqu'une personne rappelle un serveur d'application ASj (j = 1 à 4), à une adresse de communication indiquée, avec son terminal de communication Ti', elle peut indiquer ses dates de disponibilité et l'identifiant de réunion qui va lui permettre d'en déduire qu'il doit communiquer ce dernier au serveur d'application complémentaire ASC avec lesdites dates de disponibilité et l'identifiant du terminal de communication Ti' appelant.

Si le message reçu est de type textuel, il contient obligatoirement au moins une adresse de communication à laquelle la personne choisie pourra indiquer sa disponibilité pour chaque date proposée, ainsi que l'identifiant de réunion. Cette adresse de communication est par exemple celle du serveur de messagerie électronique AS2 (il s'agit par exemple d'une adresse IP dédiée) ou bien celle du serveur web AS4. Mais, on peut envisager de fournir à la fois l'adresse de communication du serveur vocal AS1 (numéro de téléphone) et l'adresse de communication d'un serveur de messagerie AS2 ou AS3 et/ou l'adresse de communication du serveur web AS4. Ainsi, lorsqu'une personne rappelle un serveur d'application ASj (j = 1 à 4), à une adresse de communication indiquée, avec son terminal de communication Ti', elle peut lui indiquer ses dates de disponibilité et l'identifiant de réunion qui va lui permettre d'en déduire qu'il doit communiquer ce dernier au serveur d'application complémentaire ASC avec lesdites dates de disponibilité et l'identifiant du terminal de communication Ti' appelant.

On notera qu'une personne peut recevoir un message de demande de disponibilité d'un serveur d'application, par exemple AS2, et choisir d'indiquer ses dates de disponibilité via un autre serveur d'application, par exemple AS1, AS3 ou AS4. Pour ce faire, il faut qu'elle dispose des adresses de communication des différents serveurs d'application ASj (j = 1 à 4).

Une fois que le serveur d'application complémentaire ASC dispose de l'ensemble des disponibilités de chacune des personnes choisies, il peut définir au moins une date de réunion qui convient à la majorité des personnes choisies et si possible à toutes (lorsqu'il existe une date de disponibilité commune).

Le serveur d'application complémentaire ASC transmet alors la date de réunion définie au client IMS qui est à l'origine de la demande d'organisation de réunion ainsi qu'aux personnes choisies.

On notera qu'après la définition d'une date de réunion par le serveur d'application complémentaire ASC, il peut arriver qu'au moins une personne soit obligée de modifier ses disponibilités. A cet effet, la personne concernée peut utiliser la procédure décrite ci-avant pour retransmettre ses nouvelles dates de disponibilité et l'identifiant de réunion à un serveur d'application ASj (j = 1 à 4) du réseau IMS CRI afin qu'il les communique au serveur d'application complémentaire ASC avec l'identifiant de communication du terminal de communication Ti' utilisé pour la mise à jour des disponibilités. Le serveur d'application complémentaire ASC peut alors tenter de définir une nouvelle date de réunion. Si cela s'avère impossible, deux cas peuvent être envisagés : soit la précédente date de réunion est conservée et le serveur d'application complémentaire ASC le signale au client IMS qui est à l'origine de la demande d'organisation de réunion ainsi que de préférence à toutes les personnes concernées, soit le serveur d'application complémentaire ASC demande au client IMS et à toutes les autres personnes concernées de fournir de nouvelles dates. Si cela s'avère possible, le serveur d'application complémentaire ASC signale la nouvelle date de réunion qui satisfait tout le monde au client IMS et à toutes les autres personnes concernées.

On notera également qu'une personne concernée par une réunion peut à tout moment accéder au serveur web AS4 afin d'accéder à la page web de consultation du calendrier du planning.

Il est important de noter que l'invention peut être également considérée sous l'angle d'un procédé de gestion d'organisation de réunions consistant à :
- prévoir un serveur d'application complémentaire ASC du type de celui décrit ci-avant, et
- en cas de demande par un client du réseau IMS CRI, au moyen d'un terminal de communication Ti, d'organisation d'une réunion à au moins une date proposée avec des personnes choisies (disposant chacune d'au moins un terminal de communication Ti'), à utiliser le serveur d'application complémentaire ASC d'une part pour adresser à chaque personne choisie, via l'un au moins des serveurs d'application ASj (j = 1 à 3), une demande de participation à la réunion et chaque date proposée associée, de sorte qu'elle indique sa disponibilité pour chaque date proposée associée, et d'autre part pour définir au moins une date de réunion en fonction des disponibilités indiquées.

L'invention ne se limite pas aux modes de réalisation de procédé de gestion d'organisation de réunions et de serveur d'application de gestion d'organisation de réunions décrits ci-avant, seulement à titre d'exemple, mais elle englobe toutes les variantes que pourra envisager l'homme de l'art dans le cadre des revendications ci-après.

## Revendications

1. Procédé de gestion d'organisation de réunions pour des clients d'un coeur de réseau de type IMS (CRI) connecté à au moins un réseau Internet (RI) et un réseau de téléphonie (RT) et comprenant au moins un serveur d'application de type serveur vocal (AS1) et au moins un serveur d'application de type serveur de messagerie (AS2) propres à participer à des communications avec des terminaux de communication (Ti) de différents types connectés auxdits réseaux Internet (RI) et de téléphonie (RT),
**caractérisé en ce qu'**il consiste :
- à prévoir dans ledit coeur de réseau IMS (CRI) un serveur d'application complémentaire (ASC) dédié à la gestion de réunions et couplé, via une interface, aux autres serveurs d'application (ASj), et
- en cas de demande par un client, au moyen d'un terminal de communication (Ti), d'organisation d'une réunion à au moins une date proposée avec des personnes choisies disposant chacune d'au moins un terminal de communication (Ti'), à utiliser ledit serveur d'application complémentaire (ASC) i) pour adresser à chaque personne choisie, via l'un au moins desdits autres serveurs d'application (ASj), une demande de participation à ladite réunion et chaque date proposée associée, de sorte qu'elle indique sa disponibilité pour chaque date proposée associée, et ii) pour définir au moins une date de réunion en fonction desdites disponibilités indiquées.

2. Procédé selon la revendication 1, **caractérisé en ce que** la personne choisie indique immédiatement sa disponibilité pour chaque date proposée associée lorsqu'elle reçoit une demande de participation à une réunion.

3. Procédé selon l'une des revendications 1 et 2, **caractérisé en ce que** l'on adresse avec ladite demande de participation à une réunion au moins une adresse de communication à laquelle la personne choisie pourra indiquer ultérieurement sa disponibilité pour chaque date proposée associée.

4. Procédé selon la revendication 3, **caractérisé en ce que** ladite demande de participation à une réunion comprend au moins une adresse de communication associée à un serveur d'application choisi parmi ledit serveur vocal (AS1), un serveur de messagerie (AS2) et un serveur Internet (AS4) dudit coeur de réseau IMS (CRI) permettant d'accéder à une page Internet de consultation d'un calendrier du planning de la réunion et dans lequel la personne destinatrice de ladite demande peut sélectionner parmi les dates proposées celle(s) où elle est disponible.

5. Procédé selon l'une des revendications 1 à 4, **caractérisé en ce que** ledit client demandeur transmet audit serveur d'application complémentaire (ASC) une liste contenant le nom de chaque personne choisie en correspondance d'au moins un identifiant de communication d'un terminal de communication (Ti') qu'elle utilise.

6. Procédé selon l'une des revendications 1 à 5, **caractérisé en ce qu'**en présence d'un serveur d'application auxiliaire (ASA), dédié au stockage de données relationnelles au sein dudit coeur de réseau IMS (CRI) et accessible via ladite interface, ledit client demandeur transmet audit serveur d'application complémentaire (ASC) soit un identifiant de groupe de personne(s) désignant une liste comprenant le nom de chaque personne choisie en correspondance d'au moins un identifiant de communication d'un terminal de communication (Ti') qu'elle utilise et accessible via ledit serveur d'application auxiliaire (ASA), soit une liste contenant le nom de chaque personne choisie dont l'identifiant de communication d'au moins un terminal de communication (Ti') qu'elle utilise est accessible via ledit serveur d'application auxiliaire (ASA), de sorte que ledit serveur d'application complémentaire (ASC) récupère auprès dudit serveur d'application auxiliaire (ASA) au moins un identifiant de communication d'un terminal de communication (Ti') utilisé par chaque personne choisie dont le nom est contenu soit dans la liste identifiée par ledit identifiant de groupe de personne(s) reçu, soit dans ladite liste reçue.

7. Serveur d'application de gestion d'organisation de réunions (ASC) pour un coeur de réseau de type IMS (CRI) connecté à au moins un réseau Internet (RI) et un réseau de téléphonie (RT) et comprenant au moins un autre serveur d'application de type serveur vocal (AS1) et un autre serveur d'application de type serveur de messagerie (AS2) propres à participer à des communications avec des terminaux de communication (Ti) de différents types connectés auxdits réseau Internet (RI) et de téléphonie (RT), **caractérisé en ce qu'**il comprend une interface propre à être couplée auxdits autres serveurs d'application (ASj), et **en ce qu'**il est agencé, en cas de demande par un client du coeur de réseau de type IMS (CRI), au moyen d'un terminal de communication (Ti), d'organisation d'une réunion à au moins une date proposée avec des personnes choisies disposant chacune d'au moins un terminal de communication (Ti'), i) pour adresser à chaque personne choisie, via l'un au moins desdits autres serveurs d'application (ASj), une demande de participation à ladite réunion et chaque date proposée associée, de sorte qu'elle indique sa disponibilité pour chaque date proposée associée, et ii) pour définir au moins une date de réunion en fonction desdites disponibilités indiquées.

8. Serveur selon la revendication 7, **caractérisé en ce qu'**il est agencé, lorsqu'il adresse à une personne choisie une demande de participation à une réunion, pour attendre que ladite personne choisie indique immédiatement sa disponibilité pour chaque date proposée associée.

9. Serveur selon l'une des revendications 7 et 8, **caractérisé en ce qu'**il est agencé pour adresser avec ladite demande de participation à une réunion au moins une adresse de communication à laquelle une personne choisie pourra indiquer ultérieurement sa disponibilité pour chaque date proposée associée.

10. Serveur selon l'une des revendications 7 à 9, **caractérisé en ce qu'**il est agencé pour recevoir d'un client demandeur une liste contenant le nom de chaque personne choisie en correspondance d'au moins un identifiant de communication d'un terminal de communication (Ti') qu'elle utilise.

11. Serveur selon l'une des revendications 7 à 10, **caractérisé en ce qu'**il est agencé, en présence d'un serveur d'application auxiliaire (ASA), dédié au stockage de données relationnelles au sein dudit coeur de réseau IMS (CRI) et accessible via ladite interface, pour recevoir d'un client demandeur soit un identifiant de groupe de personne(s) désignant une liste comprenant le nom de chaque personne choisie en correspondance d'au moins un identifiant de communication d'un terminal de communication (Ti') qu'elle utilise et accessible via ledit serveur d'application auxiliaire (ASA), soit une liste contenant le nom de chaque personne choisie dont l'identifiant de communication d'au moins un terminal de communication (Ti') qu'elle utilise est accessible via ledit serveur d'application auxiliaire (ASA), et pour récupérer auprès dudit serveur d'application auxiliaire (ASA) au moins un identifiant de communication d'un terminal de communication (Ti') utilisé par chaque personne choisie dont le nom est contenu soit dans la liste identifiée par ledit identifiant de groupe de personne(s) reçu, soit dans ladite liste reçue.
